# EUROPEAN PATENT SPECIFICATION

(11) **EP 3 365 296 B1**
(45) Date of publication and mention of the grant of the patent: **14.07.2021**
(21) Application number: 16791331.8
(22) Date of filing: 19.10.2016
(51) Int. Cl.: C03C 17/36, C03C 23/00

(54) **FIRE RESISTANT GLAZING AND COATING FOR A FIRE RESISTANT GLASS**
FLAMMWIDRIGE GLASUR SOWIE BESCHICHTUNG FÜR FEUERBESTÄNDIGES GLAS
VITRAGE RÉSISTANT AU FEU ET REVÊTEMENT POUR VERRE RÉSISTANT AU FEU

(30) Priority: 20.10.2015 EP 15190527
(43) Date of publication of application: 29.08.2018
(73) Proprietor: SAINT-GOBAIN GLASS FRANCE, 92400 Courbevoie (FR)
(72) Inventor: HUHN, Norbert, 52134 Herzogenrath (DE); HAGEN, Jan, 53123 Bonn (DE); PETERSEN, Christian, 52064 Aachen (DE); GUETTE, Mathilde, 52062 Aachen (DE)
(74) Representative: Frei Patent Attorneys
(86) International application number: PCT/EP2016/075080
(87) International publication number: WO 2017/067976

(56) References cited:
- WO-A1-03/074442
- WO-A1-2014/086561
- DE-C1- 19 533 053
- US-A1- 2004 043 226

## Description

The invention relates to the field of fire protection. It relates to a transparent fire resistant glazing and a fire resistant coating for the fire resistant glazing as described in the preamble of the independent claims.

Fire resistant glazings are classified according to norm EN 13501-1. Coatings for fire resistant glazing are currently based on silver stacks. These coatings are known as low E- respectively solar control coatings for building applications in double glazing units or triple glazing units to reduce heat transfer into a room or out of a room. Such silver coatings are known and described e.g. in FR 2906832 for the multiple glazings.

On the out hand silver oxide layers capable of absorbing and/or reflecting significant amount of ultraviolet (UV) radiation are known from US 2002/068167. Other upon sputtering oxygen containing silver coatings are known from DE 19533053. Such coatings are tempered together with the glass. After the tempering process the transmission of the coated glass is increased compared to the untempered state but the electrical sheet resistance of the surface coating remains the same as in the untempered state.

Silver has a high electrical conductivity, for this reason glass panes comprising a silver layer coating are used as heatable glass panes e.g. in cars, describes in DE 19533053.

Furthermore, the electrical sheet resistance is a straight forward indicator for the infrared (IR) reflectivity and respectively the emissivity of a coating comprising a silver layer. This is because as soon as the silver layer is present in a pure state without further doping with impurity atom, such as oxygen the conductivity of the silver layer increases and the electrical resistance respectively the sheet resistance (Rsq or R□) decreased compared to the oxygen containing silver layer. This means that a silver mirror comprises very good infrared radiation reflection respectively low emissivity and therefore very good heat reflection properties so called low-E values. The relation between the sheet resistance and the emissivity is shown e.g. in "J. Szczyrbowski et al. / Thin Solid Films 351 (1999) 254-259".

Traditionally, fire resistant glazings comprise at least two glass panes with an intumescent interlayer comprising a silicate. Other known fire resistant glazings comprise a Hydrogel interlayer between two glass panes which absorbs thermal energy in case of fire. Such silicate based or hydrogel based interlayers are quite heavy as they contain a lot of water for absorbing the energy. Accordingly, also the fire resistant glazings are quite heavy. Furthermore, the interlayers become cloudy or hazy in case of fire and the transparency of the glazing is reduced.

It is therefore an object of the invention to create a fire resistant coating and a transparent fire resistant glazing product with a low weight in order to achieve a simplification of mounting and installing of the glazing into a building or vehicle.

This object is achieved by a fire transformable fire resistant coating and a fire resistant glazing product according to the independent claims.

The fire transformable fire resistant coating for use in a transparent fire resistant glazing product which is arrangable on a flat side of a transparent panel element, wherein the fire transformable fire resistant coating comprises:
- at least one noble metal oxide layer and
- at least one sacrificial layer.

The at least one noble metal oxide layer comprises a noble metal oxide with a first affinity to oxygen. Furthermore the at least one sacrificial layer comprises a transition metal with a second affinity to oxygen, wherein the second affinity oxygen is higher than the first affinity to oxygen. The sacrificial layer may also be called sacrificial metallic layer, as it comprises at least one transition metal. The noble metal oxide layer is arranged alongside the sacrificial layer. This means that noble metal oxide layer and the sacrificial layer are arranged parallel to each other beside each other, wherein the two layers may directly adjacent to each other or an intermediate layer may be arranged directly between the neighbouring two layers. Thereby the fire resistant coating is transformable from a first state to a second state upon exposure to fire wherein the sheet resistance of the fire resistant coating is smaller respectively lower in the second state compared to the first state. In a first approximation the sheet resistance is proportional to the emissivity of the fire resistant coating at low resistance as illustrated in "J. Szczyrbowski et al. / Thin Solid Films 351 (1999) 254-259".

The emissivity is a measure which describes the amount of thermal radiation emitted compared to an ideal thermal emitter (so called black body). Emissivity is understood as normal degree of emission at 283 K according to Norm EN 12898 (Stand September 2015).

Upon the exposure to fire the temperature of fire transformable fire resistant coating increases, thereby the transformation of the fire resistant coating is activated an the fire resistant coating transforms form a first state into the second, infrared radiation (IR) reflective and low-E, state. Due to the lower respectively smaller sheet resistance respectively emissivity of the fire resistant coating in the second transformed state only a smaller amount of heat originating from the fire is emitted to the side facing away from the fire. Accordingly, the fire resistance properties of the fire resistant coating are activated upon fire as upon exposure to fire the noble metal oxide (NMeO) of the noble metal oxide layer is reduced to noble metal layer wherein transition metal (TMe) of the sacrificial layer is oxidised to transition metal oxide (TMeO), as illustrated in the following equation:

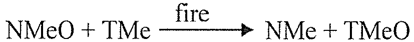

Thereby, the transformed and reduced noble metal (NMe) is capable to reflect infrared radiation more effectively and does emit less heat radiation than the noble metal oxide before the exposure of fire. Thus, it becomes possible to provide a fire transformable fire resistant coating which is significantly lighter than a traditional fire protection interlayer which is to be arranged between two glass panes. The fire resistant coating according to the invention is arrangeable on the flat side of a transparent panel element, therefore only one panel, instead to two panels for the traditional interlayer, is required to enable an enhancement of the fire resistance as a second glass pane is not required. Furthermore, the fire resistant coating itself is significantly lighter than traditional water containing interlayers. Accordingly, the load and stress on a fire resistant glazing product is significantly reduced and a probability of failure or damage of the glazing product upon exposure to fire, where additional stress is exposed to the glazing product, or upon installation or mounting of the glazing product in a building or vehicle, where care must be taken be the installer or worker.

In addition to the aforementioned decrease of the sheet resistance respectively of the emissivity of the fire resistant coating upon exposure to fire also the infrared radiation reflectivity of the fire resistant coating increases in the second state compared to the first state. Accordingly, also heat originating from the fire can be reflected back to the burning room. Accordingly, also the infrared radiation reflectivity is affecting the fire resistance properties of the fire resistant coating respectively of a fire resistant glazing product where the fire resistant coating is arranged on the flat side of a transparent panel element. Nevertheless, the sheet resistance respectively the emissivity will mainly be used in the following discussion as the emissivity is an integral measure is more suitable measure than the infrared radiation reflectivity which significantly depends on the wavelength.

Two main situations might occur. First of all, the fire resistant coating can be arranged facing towards the fire. In this case the increased infrared radiation reflectivity of the fire resistant coating in the second state and the resulting reflection of the heat back to the burning room is the predominate effect enhancing the fire resistance of a transparent panel element and/or a fire resistant glazing product. Second of all, the fire resistant coating can be arranged facing away from the fire. In this case the low sheet resistance respectively low emissivity of the fire resistant coating in the second state and the resulting reduced amount of heat emitted to the side facing away from the fire is the predominate effect enhancing the fire resistance of a transparent panel element and/or a fire resistant glazing product. As a matter of course both effects can be combined if a fire resistant coating is arranged on each flat side of the transparent panel element.

It shall be mentioned that the flat side of the transparent panel element can also be curved. The flat side of the transparent panel element is the one of two large parallel surfaces of the transparent panel element. The two flat sides of the transparent panel element are connected via an end face, wherein the end face is also called edge of the transparent panel element. The end face has a smaller surface area than the flat side and its dimension correlates to the thickness of the transparent panel element. In other words: the end face corresponds to the area respectively surface between the two flat sides of the transparent panel element.

Upon exposure of fire the temperature of the fire resistant coating can easily rise up to 450°C or higher and the transformation of the fire resistant coating form the first state to the second state is activated respectively triggered. The activation may already start at approximately 250°C. Nevertheless, a reliable and rather complete transformation is achieved at higher temperatures such as 450°C.

Due to the transformation of the fire resistant coating the emissivity can decrease by at least 5%, in particular by at least 20%, in particular by at least 50%, compared to the first, none fire-activated, state. The sheet resistance, which is related to the emissivity, can also drop by a factor of at least 5, in particular 10, in particular 20, in particular 50, in particular 100 upon transformation from the first state to the second state.

The fire transformable fire resistant coating can be designed to be used in respectively for a transparent fire resistant glazing product. The fire transformable fire resistant coating can be designed to be arrangable on a flat side of a transparent panel element.

The sacrificial layer can be designed for building a reducing surrounding for the at least one noble metal oxide layer.

In an embodiment the at least one noble metal oxide layer comprises a noble metal as silver, copper, gold, platinum, palladium, iridium, an alloy of noble metal and/or an alloy of a noble metal with a transition metal and/or a mixture thereof. Thereby, the noble metal oxide layer comprises at least 10 %, in particular at least 50% of the metal, alloy or mixture mentioned above. This makes it possible to adapt the properties of the noble metal oxide layer to the requirements of the fire transformable fire resistant coating and enables the transformability of the fire resistant coating.

Furthermore, the at least one noble metal oxide layer can have a thickness of 10 nm to 100 nm, in particular 20 nm to 70 nm, in particular 30 nm to 60 nm. This ensures that the fire resistant coating has a thin width respectively small thickness. Due to the small thickness of the noble metal oxide layer which is significantly smaller than the thickness of a transparent panel element, which normally ranges from 1 mm to couple of tenth of millimetre, the transmission of light is not influenced significantly. Rather in case the noble metal oxide layer becomes too thick the transmission of the entire fire resistant coating is decreased which is not desired. Furthermore, the small thickness of the noble metal oxide layer ensures a low weight of the fire transformable fire resistant coating and therefore of the fire resistant glazing product on which it may be applied.

In an embodiment the at least one sacrificial layer comprises a transition metal as niobium, titanium, zirconium, hafnium, tantalum, vanadium, molybdenum, tungsten, nickel, chromium and/or a mixture thereof and/or an alloy thereof. Alloys with other elements e.g. silicon or aluminium could also be comprised by the sacrificial layer. This makes it possible to adapt the properties of the sacrificial layer to the requirements of the fire transformable fire resistant coating and to the requirements, as the oxygen affinity, of the noble metal oxide layer. Accordingly, the transformability of the fire resistant coating can be ensured. Furthermore, the chemical resistance of the fire resistant coating can be adjusted respectively improved by the sacrificial layer.

The at least one sacrificial layer can have has a thickness of 0.5 nm to 10 nm, in particular transparent panel element 1 nm to 8 nm, in particular fire resistant coating 2.5 nm to 6.5 nm. This ensures that the fire resistant coating has a thin width respectively small thickness compared to traditional fire resistant interlayer with a thickness of couple of millimetre. Accordingly, it a low weight of the fire transformable fire resistant coating can be ensured and therefore of the fire resistant glazing product on which it may be applied. Furthermore, as discussed for the noble metal oxide layer due to the small thickness of the sacrificial layer which is significantly smaller than the thickness of a transparent panel element the transmission of light is not influenced significantly. Rather in case the sacrificial layer becomes too thick the transmission of the entire fire resistant coating is decreased which is not desired.

The sacrificial layer can comprise a lithophile element and the noble metal oxide layer can comprise a siderophil or chalcophil element according to Goldschmidt classification. According to the Goldschmidt classification chemical elements can be grouped according to their preferred host phase into lithophile (rock-loving), siderophile (iron-loving), chalcophile (ore-loving or chalcogen-loving), and atmophile (gas-loving) or volatile (the element, or a compound in which it occurs, is liquid or gaseous at ambient surface conditions). Thereby lithophile elements are those that combine readily with oxygen, accordingly lithophile elements have a strong affinity to oxygen. Most siderophile elements have practically no affinity for oxygen. Such siderophile elements rather form stronger bonds with carbon or sulfur. Furthermore, chalcophile elements combine readily with sulfur and/or some other chalcogen other than oxygen. Chalcophile elements have a low affinity to oxygen.

The fire resistant coating comprises at least one separator layer arranged between the at least one noble metal oxide layer and the at least one sacrificial layer. The separator layer is designed to prevent reduction of the noble metal oxide of the noble metal oxide layer at room temperature. Such a separator layer between the noble metal oxide layer and the sacrificial layer improves an aging stability of the stacked fire resistant coating. This is because unwanted reduction of the noble metal oxide to IR reflecting noble metal at room temperature can be prevented. Accordingly, the transformable fire resistant coating stays in the first state as long as the fire resistant coating, which might be arranged on the glazing product, is exposed to fire and a premature transformation of the fire resistant coating can be prevented and/or inhibited.

The at least one separator layer may comprise zinc tin oxide and/or tin oxide, in particular indium tin oxide. This enables adjusting the properties of the separator layer to the neighbouring noble metal oxide layer and sacrificial layer.

The separator layer can have a thickness of 0.5 nm to 50 nm, in particular 2 nm to 35 nm, in particular 7 nm to 15 nm.

In an embodiment the fire transformable fire resistant coating can comprise at least one barrier layer arranged as outer most layer of the fire resistant coating on a side facing either away from or towards a transparent panel element. The barrier layer is designed to prevent a degrade/decomposition of the fire resistant coating. The barrier layer makes it possible that the resistance of the fire resistant coating to environmental conditions is improved. Especially, in case the fire resistant coating is in contact to a transparent panel element, which may comprise any kind of transparent material, as e.g. glass, tempered glass, soda-lime glass, borosilicate glass, prespex glass and/or any other kind, the barrier layer can prevent the diffusion of atoms, such as e.g. alkaline metal atoms, from the transparent panel element into the fire resistant coating or vice versa. Accordingly, the stability of the fire resistant coating can be improved by the barrier layer. It is possible that a barrier layer is arranged on each side of the fire resistant coating shield the environmental conditions from both sides of the fire resistant coating.

The at least one barrier layer can have a thickness of 5 nm to 50 nm, in particular 15 nm to 45 nm, in particular 30 nm to 40 nm.

The barrier layer can comprise silicon oxide, silicon nitride, aluminium doted silicon oxide, aluminium doted silicon nitride, aluminium oxide, aluminium nitride, tin oxide, titanium oxide and/or a mixture therefore.

In an embodiment the fire transformable fire resistant coating can comprise at least one optical layer arranged adjacent to the at least one sacrificial layer, wherein the at least one optical layer is facing away from the at least one noble metal oxide layer and/or facing away form a transparent panel element. The optical layer is designed to adjust the reflection optics of the fire resistant coating. This makes it possible to alter the way in which the fire resistant coating reflects and transmits light of the visible spectrum. By controlling or adjusting the thickness and/or density to the optical layer, it is possible to decrease the reflectivity and increase the transmission of the fire resistant coating. By careful choice of the exact composition, thickness, and number of these optical layers, it is possible to tailor the reflectivity and transmitivity of the fire resistant coating to produce almost any desired characteristic. The optical layer is preferably arranged as one of the outer most layers of the layer stack of the fire resistant coating. In some embodiments at least one barrier layer can be arranged on top of the optical layer. This does not exclude that an optical layer can be arrange as an inner layer of the stack structure of the fire resistant coating.

In further embodiments a scratch-resistant layer may be arranged as far outer most layer of the fire resistant coating. As already described the fire resistant coating can be arranged on the flat side of a transparent panel element being part of a fire resistant glazing unit. Thereby, the scratch-resistant layer is facing away from the transparent panel element and protects whole stack of layers of the fire resistant coating from scratches. The scratch-resistant layer can provide a chemical and/or mechanical resistance for the whole fire resistant coating similar to the barrier layer.

The scratch-resistant layer for can providing a chemical and/or mechanical resistance for the whole fire resistant coating can comprise titanium oxide, zirconium oxide, hafnium oxide and/or mixtures thereof.

The at least one optical layer can have a thickness of 5 nm to 100 nm, in particular 15 nm to 80 nm, in particular 25 nm to 60 nm.

The optical layer for adjusting the reflection optics of the fire resistant coating can comprise aluminium oxide, aluminium nitride, silicon oxide, silicon nitride, aluminium doted silicon oxide, aluminium doted silicon nitride, tin oxide titanium oxide, zirconium oxide, hafnium oxide, vanadium oxide, niobium oxide, tantalum oxide, chromium oxide, scandium oxide, yttrium oxide, aluminium doted zinc oxide (AZO), zinc tin oxide and/or indium tin oxide (ITO). Furthermore, also other optical layers comprising magnesium fluoride, calcium fluoride and/or other fluorides and/or mixtures thereof.

In a further embodiment the noble metal oxide layer can comprise at least two noble metal oxide sublayers which are separated by at least one separator layer as described above and/or by at least one sacrificial layer as described above. The separator layer is designed to prevent reduction of the noble metal oxide of the noble metal oxide sublayer at room temperature. The sacrificial layer is designed for building a reducing surrounding for the at least one noble metal oxide sublayer. With this it becomes possible to adjust the properties of each individual layer of the coating in a very effective way, as each sublayer can be adapted to the requirements of the fire resistant coating. Furthermore, the transformability of the fire resistant coating can be maintained or even supported by arranging several noble metal oxide sublayers in the fire resistant coating. Furthermore, a higher transmission of light can be achieved in the first, non-transformed respectively cold state as compared to one thick noble metal oxide layer instead of several separated thinner noble metal oxide sublayers.

Additionally, a light absorption of the fire resistant glazing in the second state can be as least as high as the light absorption of the fire resistant glazing in the first state. It is also possible that the absorption of visible light increases upon transformation of the fire resistant coating from the first state to the second state. Nevertheless, it is still possible to see through a transparent panel element to which the fire resistant coating is applied after transformation into the second state. Accordingly, a fire fighter arriving to the seat of fire is still able to spot a person on the fire side and can take action to safe the person on the fire side. In contrast to that traditional interlayer of fire protection glazings get hazy and/or clouding upon activation. Therefore, the fire fighter cannot look through the hazy interlayer and does not know that a person on the flame side has to be saved. It is clear to the skilled person that the on the fire side soot might be build, such soot deposition is not considered when evaluating the absorption of light in the first and second state of the fire resistant coating.

In a further embodiment additionally a sheet resistance of the fire resistant coating in the second state can be lower than the sheet resistance of the fire resistant coating in the first state. As the sheet resistance decreases upon exposure to fire the conductivity of the fire resistant coating increases, therefore it is possible to detect the difference of the conductivity and/or sheet resistance as measure for the transformation of the fire resistant coating from the first state to the second state. Accordingly, upon detection of the transformation a fire alarm might be activated.

In a further embodiment the fire resistant coating can comprise at least one seed layer arranged adjacent to the at least on noble metal oxide layer. The seed layer is designed to promote the growth of a noble metal layer upon transformation of the noble metal oxide layer into the second state. With this it becomes possible, that the growth of the metallic noble metal layer is enhanced and thereby the transformation into the second state with a low sheet resistance respectively low emissivity is favoured. Accordingly, the fire protective properties of the fire resistant coating in the second state can be reached easier and more reliably. Furthermore, on the one hand the seed layer can promote the growth of the noble metal oxide layer during manufacturing via a layered sputtering process as the case may be the noble metal oxide layer is coated on top of the seed layer. On the other hand upon transformation of the fire resistant coating the seed layer inhibits or reduces dewetting of the noble metal layer and promotes the formation of a uniform noble metal layer.

The at least one seed layer can comprise zinc tin oxide, niobium oxide, aluminium doted zinc oxide and/or tin oxide, in particular indium tin oxide.

The at least seed layer can have a thickness of 5 nm to 50 nm, in particular 10 nm to 40 nm, in particular 15 nm to 35 nm.

As already described above the fire transformable fire resistant coating can be used in transparent fire resistant glazing products for increasing the fire resistance of the glazing product. The transparent fire resistant glazing product comprises a transparent panel element and the fire resistant coating as described above. The fire resistant coating is arranged on a flat side of the transparent panel element. The claimed fire resistant glazing product is ready for delivery and/or shipment and/or installation in a building and/or vehicle. In contrast to that coatings are known from the prior art were a coating is applied to a glass pane and before delivery or installation the glass pane together with the applied coating is tempered or prestressed. In such a case the properties of the glass pane and the coating are changed and intermediate product (glass pane with coating) is not identical with the final product (glazing with pre stressed glass pane and pre stressed coating). The transparent fire resistant glazing product being a final, ready to use product makes it possible to increase the fire resistance on a glazing upon exposure to fire, as the fire resistant coating transforms from the first state to the second state. Thereby the sheet resistance respectively the emissivity of the fire resistant coating and therefore of the glazing product decreases and less heat radiation is emitted in the second state compared to the first state. Furthermore, more infrared radiation can be reflected in the second state compared to the first state. Accordingly the fire resistance of the fire resistant glazing product is increased, which involves an improvement of the fire resistant properties of the fire resistant glazing product.

In an embodiment the at least one noble metal oxide layer is arranged between the at least one sacrificial layer and the transparent panel element. Accordingly, the noble metal oxide layer is arranged closer to the transparent panel element than the sacrificial layer. This makes it possible that a temperature change of the transparent panel element resulting from the exposure to fire can result in relatively direct activation of the closely arranged noble metal oxide layer which can upon activation transform to the second state.

Furthermore, the ready for use fire resistant glazing product can comprise a frame and/or a holder/mounting brackets for immediate installation into a building and/or vehicle. Accordingly, the fire resistant glazing product can immediately be installed without further processing of the glazing product.

Moreover, upon exposure to fire the fire transformable fire resistant coating can transform at least partially to a metallic mirror which is capable of reflecting infrared radiation and reveals a low sheet resistance respectively low emissivity. Accordingly, the fire resistance of the fire resistant coating and/or the fire resistant glazing product is increased due to the transformation of the fire resistant coating into the second state.

The transparent panel element can comprise a glass pane, in particular tempered glass pane, in particular float glass, soda-lime glass, tined glass, borosilicate glass with low thermal expansion. With this the becomes possible to keep the stability and/or fire resistance of the fire resistant glazing product at already high level in a first state of the fire resistant coating. This improves the stability and fire resistance time of the transparent panel element also upon exposure to fire, when the fire resistant coating is transformed into the second state.

The fire resistant glazing product can be designed as a single glazing unit and/or double glazing unit and/or triple glazing unit. Also laminated glazing unit are possible, as well as further multiple glazing units. Furthermore, a combination of the fire resistant coating arranged on a transparent panel element with a traditional interlayer of fire protection glazings is possible.

In some embodiments a fire resistant coating is arranged on each flat side of the transparent panel element. Accordingly, the fire resistance of the transparent panel element and/or eventually the fire resistant glazing product can be enhanced compared to a single coating on only one flat side of the transparent panel element respectively fire resistant glazing unit.

In further embodiments the fire resistant coating according to the invention can be combined with a traditional interlayer comprising a silicate or a hydrogel. With this a further enhancement of the fire resistance duration of a traditional fire protection glazing product can be enabled.

The coated transparent panel element with the fire resistant coating arranged at at least one flat side can also be used in a composite glazing product.

In further embodiments the transparent panel element can be a transparent foil element which can be applied onto a support element, such as a glass pane.

As already explained above the transparent fire resistant glazing product can be used for manufacturing a building and/or vehicle.

Further preferred embodiments are evident from the dependent patent claims. Features of the use claims may be combined with features of the device claims and vice versa.

The subject matter of the invention will be explained in more detail in the following text with reference to exemplary embodiments which are illustrated in the attached drawings, in which:
- Figure 1: simply structured fire resistant coating arranged on a flat side of a transparent panel element;
- Figure 2: modified structure of a fire resistant coating arranged on a flat side of a transparent panel element;
- Figure 3: further structure of a fire resistant coating arranged on a flat side of a transparent panel element;
- Figure 4: a symmetrically structured fire resistant coating arranged on a flat side of a transparent panel element;
- Figure 5: a modified structure of a fire resistant coating arranged on a flat side of a transparent panel element; and
- Figure 6: a bar chart illustrating the change of selected properties of the fire resistant coating upon exposure to fire.

The reference symbols used in the drawings, and their meanings, are listed in summary form in the list of reference symbols. In principle, identical parts are provided with the same reference symbols in the figures.

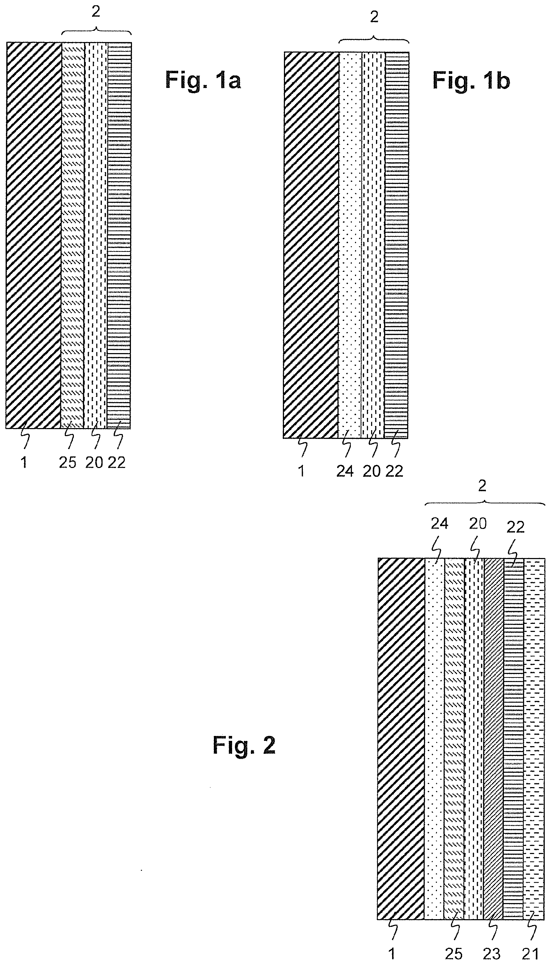

Figure 1a shows a fire resistant coating 2 arranged on a flat side of a transparent panel element 1, which comprises a glass pane which might easily be a tempered glass pane. The fire resistant coating 2 comprises a barrier layer 24, a noble metal oxide layer 20 and a sacrificial layer 22. The noble metal oxide layer 20 is arranged between the barrier layer 24 and the sacrificial layer 22, wherein the barrier layer 24 is arranged adjacent to the glass pane and the sacrificial layer 22 is arranged as the outermost layer of the stack of layer facing away from the glass pane. The simple structure of the fire resistant coating 2 builds a fire transformable fire resistant coating 2 which can be used in fire protections glazing products.

Figure 1b shows a fire resistant coating 2 arranged on a flat side of a transparent panel element 1, which comprises a glass pane which might easily be a tempered glass pane. The fire resistant coating 2 comprises a sacrificial layer 22, a noble metal oxide layer 20 and a seed layer 25. The seed layer 25 is arranged next to the glass pane 1 and adjacent to the seed layer 25 the noble metal oxide layer 20. The noble metal oxide layer 20 is arranged between the seed layer 25 and the sacrificial layer 22. In such an embodiment of the invention the sacrificial layer 22 forms the outermost layer of a stack of layers building the fire resistant coating 2. The simple structure of the fire resistant coating 2 builds a fire transformable fire resistant coating 2 which can be used in fire protections glazing products.

In the event of fire the oxygen atoms of the noble metal oxide layer 20 are absorbed by the sacrificial layer 22, as the oxygen affinity of the sacrificial layer 22 is higher than the oxygen affinity of the noble metal oxide layer 20. Accordingly, upon exposure to fire the fire resistant coating 2 is transformed from a first state to a second state and a noble metal layer is formed in the second state, which has a higher infrared radiation reflectivity and a lower sheet resistance respectively lower emissivity than the noble metal oxide layer 20 of the fire resistant coating 2 in the first state. Thereby the seed layer 25 promotes the transformation of the noble metal oxide to the noble metal and favours the formation of a metallic mirror layer in the second state. In an embodiment according to figure 1a the barrier layer 24 prevents the diffusion of atoms, such as e.g. alkaline metal atoms, from the glass pane into the fire resistant coating or vice versa. Accordingly, the stability of the fire resistant coating 2 can be improved by the barrier layer 24.

In figure 2 a further example with a modified structure of the fire resistant coating 2 depicted in figure 1 is shown. Thereby, a barrier layer 24 is arranged between the seed layer 25 and the glass pane 1 and an optical layer 21 is arranged as the outermost layer facing away from the glass pane 1. The barrier layer 24 is arranged as outer most layer of the fire resistant coating 2 on a side facing either away from or towards a transparent panel element 1. The barrier layer 24 is designed to prevent a degrade respectively decomposition of the fire resistant coating by building a barrier between the seed layer 25 and the transparent panel element 1. The optical layer 21 arranged adjacent to the sacrificial layer 22, wherein the optical layer 21 is facing away from the noble metal oxide layer 20. The optical layer 21 is designed to adjust the reflection optics of the fire resistant coating 2, therefore the optical layer 21 is arranged as the outer most layer of the stack of layers of the fire resistant coating 2. Furthermore, a separator layer 23 is arranged between the noble metal oxide layer 20 and the sacrificial layer 22. The separator layer 23 is designed to prevent reduction of the noble metal oxide of the noble metal oxide layer 20 at room temperature. Such a separator layer 23 between the noble metal oxide layer 20 and the sacrificial layer 22 improves an aging stability of the stacked fire resistant coating 2. Exemplary examples 1 and 2 for the structure of such a fire resistant coating 2 as shown in figure 2 are disclosed in table 1 below.

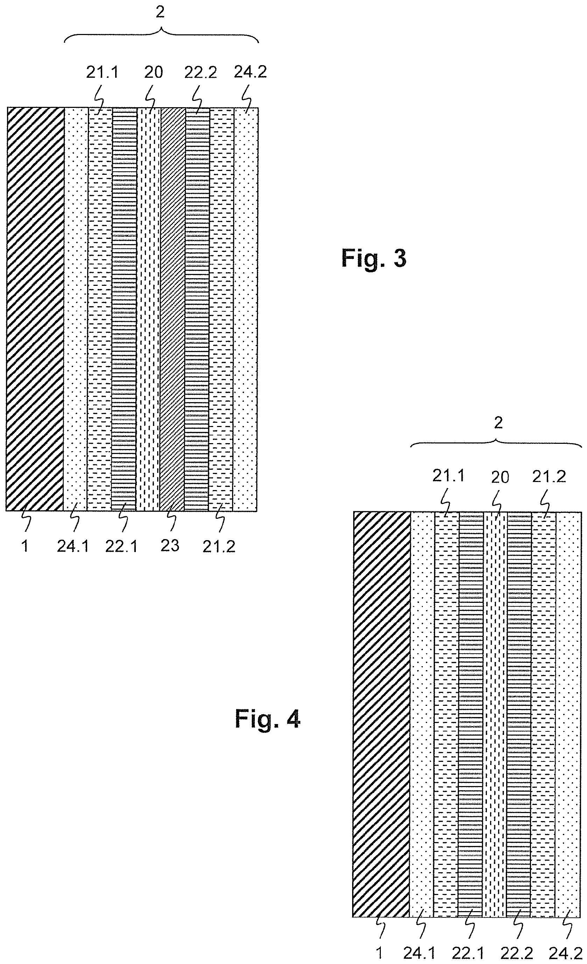

A further exemplary stack structure of the fire resistant coating 2 arranged on a glass pane is shown in figure 3, which can be view as a further modification of the fire resistant coating 2 shown in figure 1. Thereby, a first barrier layer 24.1 is arranged adjacent to the transparent panel element 1 on a flat side of the transparent panel element 1. Adjacent to the first barrier layer 24.1 a first optical layer 21.1 is arranged which is neighboured by a first sacrificial layer 22.1. Next to the first sacrificial layer 22.1 a noble metal oxide layer 20 is arranged. The noble metal oxide layer 20 is separated form a further second sacrificial layer 22.2 by a separator layer 23. Adjacent to the second sacrificial layer 22.2 a further second optical layer 21.2 is arranged. As an outer most stack layer a second barrier layer 24.2 is arranged adjacent to the second optical layer 21.2. This results in an almost symmetric stack structure of the fire resistant coating 2. Accordingly, it is also possible to arrange a further glass pane on the outermost second barrier layer 24.2 to obtain a symmetric double glazing unit.

In figure 4 a symmetrical stack structure for a fire transformable fire resistant coating 2 is shown. In contrast to figure 3 the separator layer 23 is omitted. Exemplary example 3 for the structure of such a fire resistant coating 2 as shown in figure 4 are disclosed in table 1 below.

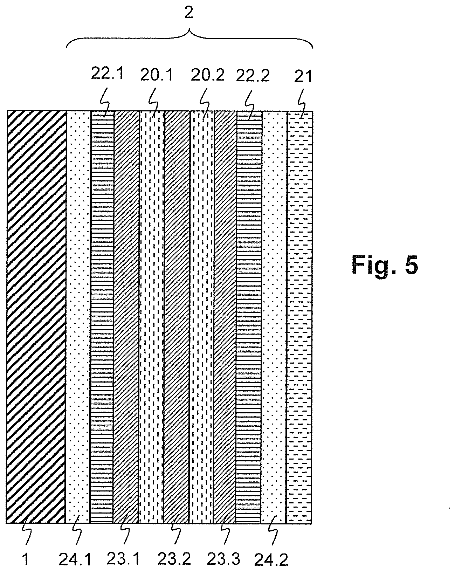

In figure 5 a modified structure of a fire resistant coating 2 arranged on a flat side of a transparent panel element 1, which comprises a glass pane which might easily be a tempered glass pane. Thereby, a first barrier layer 24.1 is arranged adjacent to the transparent panel element 1 on a flat side of the transparent panel element 1. Adjacent to the first barrier layer 24.1 a first sacrificial layer 22.1 is arranged. Adjacent to the first sacrificial layer 22.1 a first separator layer 23.1. The first separator layer 23.1 is arranged next to a first noble metal oxide layer 20.1. The first noble metal oxide layer 20.1 is separated from a second noble metal oxide layer 20.1 by a second separator layer 23.2. The two separated noble metal oxide layers 20 can be called noble metal oxide sublayers 20 wherein the separator layer 23.2 arranged between the two noble metal oxide sublayers 20 prevents reduction of the noble metal oxide of the noble metal oxide layer 20 at room temperature. Adjacent to the second noble metal oxide layer 20.2 a further third separator layer 23.3 is arranged which separates the second noble metal oxide layer 20.2 from a second sacrificial layer 22.2 arranged adjacent to the third separator layer 23.3. Adjacent to the second sacrificial layer 22.2 a second barrier layer 24.2 is arranged. An optical layer 21 arranged adjacent to the second barrier layer 24.2, wherein the optical layer 21 is facing away from the transparent panel element 1. The optical layer 21 is designed to adjust the reflection optics of the fire resistant coating 2, therefore the optical layer 21 is arranged as the outer most layer of the stack of layers of the fire resistant coating 2.

**Table 1 - stack structure of a fire resistant coating 2**

| | example 1 | example 2 | example 3 | example 4 |
|---|---|---|---|---|
| | Layer thickness | | | |
| glass | 2.1 mm | 2.1 mm | 2.1 mm | 2.1 mm |
| (1^{st}) barrier layer 24 (24.1) | 39 nm | 39 nm | 39 nm | 39 nm |
| seed layer 25 | 30 nm | 30 nm | 0 nm | 0 nm |
| (1^{st}) optical layer 21 (21.1) | 0 nm | 0 nm | 30 nm | 30 nm |
| (1^{st}) sacrificial layer 22 (22.1) | 0 nm | 0 nm | 3 nm | 0 nm |
| noble metal oxide layer 20 | 50 nm | 50 nm | 50 nm | 50 nm |
| separator layer 23 | 10 nm | 10 nm | 0 nm | 0 nm |
| (2^{nd}) sacrificial layer 22 (22.2) | 6 nm | 6 nm | 3 nm | 6 nm |
| (2^{nd}) optical layer 21 (21.2) | 30 nm | 30 mm | 10 nm | 10 nm |
| (2^{nd}) barrier layer 24 (24.2) | 0 nm | 0 nm | 30 nm | 30 nm |

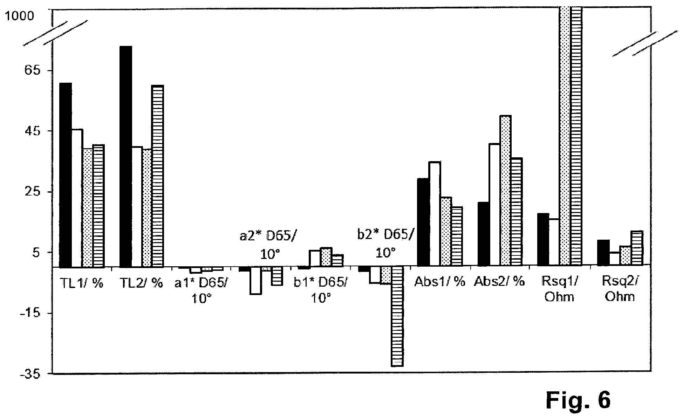

In the transformable fire resistant coating 2 according to Example 1 and 2 the barrier layers 24 comprises silicon oxide, the noble metal oxide layer 20 comprises silver oxide, the separator layer 23 comprises zinc tin oxide and the sacrificial layer 22 comprises niobium, wherein in the seed layer 25 comprises in example 1 zinc oxide doted with 2% aluminium (AZO) and in example 2 indium tin oxide (ITO). The properties of the fire resistant coating 2 in the first state and in the second transformed state according to example 1 and 2 are depicted in figure 6.

In the transformable fire resistant coating 2 according to example 3 and 4 the barrier layers 24 comprises silicon oxide, the noble metal oxide layer 20 comprises silver oxide, the sacrificial layer 22 comprises niobium and the optical layer 21 comprises zinc oxide doted with 2% aluminium (AZO).

The properties of the fire resistant coating 2 in the first state and in the second transformed state according to example 1 to 4 are depicted in figure 6. The bar chart of figure 6 illustrates the change of selected properties of the fire resistant coating upon exposure to fire. Thereby, the transmission of visible light in percent is indicated by Tl1 for the first state and Tl2 for the second state, the dimensionless values a* D65/10° and b* D65/10° characterize the colour of the transmitted light. Thereby a positive a* D65/10° represents red, a negative a* D65/10° represents green, a positive b* D65/10° represents yellow and a negative b* D65/10° represents blue. The values a1* D65/10° respectively b1* D65/10° are reached in the first state and transform to the values a2* D65/10° respectively b2* D65/10° in the second state. The absorption of visible light in percent is indicated by Abs1 for the first state and Abs2 for the second state, furthermore the sheet resistance is indicated by Rsq1 for the first state and Rsq2 for the second state. The change of the properties is given for example 3 in black, example 4 in white, example 1 doted and example 2 with strips.

As depicted in figure 6 the transmission of visible light of the fire resistant coating 2 arranged on the glass pane 1 increases from a first state (Tl1) compared to the second state (Tl2) upon exposure to fire for examples 3 and 2, when the coating is exposed to a temperature of at least 450°C for at least 5 minutes. Whereby, the transmission decreases from a first state (Tl1) compared to the second state (Tl2) for examples 4 and 1. Furthermore, the absorption of visible light is increasing upon transformation of the fire resistant coating 2 for examples 4, 1 and 2 and decreases for example 3 from a first state (Abs1) compared to the second state (Abs2) upon exposure to fire. The remaining amount of light is reflected, wherein in each state the amount of light adds up to 100 % by adding up transmission, absorption and reflection. As can be seen in figure 6 the transmission colour appearance can change significantly upon transformation of the fire resistant coating 2 for the first state to the second state.

Moreover, the sheet resistance of the fire resistant coating 2 decreases significantly upon transformation from the first state with a first sheet resistance (Rsq1) to the second state with a second sheet resistance (Rsq2). The most significant change can be surprisingly observed for examples 1 and 2, where a separator layer 23 is arranged between the noble metal oxide layer 20 and the sacrificial layer 22. As already discussed above, the sheet resistance of the fire resistant coating 2 can be interpreted as a measure for the emissivity. Accordingly, the significant decrease of the sheet resistance is linked to a significant decrease of the emissivity of the fire resistant coating 2 upon transformation from the first state to the second state. Such transformable fire resistant coating 2 revealing an increase of the infrared radiation reflectivity and decrease of the sheet resistance respectively the emissivity upon exposure to fire can be applied in fire resistant glazing products, where the increase of the infrared radiation reflectivity and decrease of the sheet resistance respectively the emissivity enables an increase of the fire resistance of the ready to use glazing product. These ready to use fire resistance glazing products can be used to manufacture a building and/or a vehicle.

While the invention has been described in present preferred embodiments of the invention, it is distinctly understood that the invention is not limited thereto, but may be otherwise variously embodied and practised within the scope of the claims.

## Claims

1. A fire transformable fire resistant coating (2) for use in a transparent fire resistant glazing product, wherein the fire resistant coating (2) is arrangable on a flat side of a transparent panel element (1), wherein the fire transformable fire resistant coating (2) comprises:
- at least one noble metal oxide layer (20) and
- at least one sacrificial layer (22)
wherein the at least one noble metal oxide layer (20) comprises a noble metal oxide with a first affinity to oxygen and
wherein the at least one sacrificial layer (22) comprises a transition metal with a second affinity to oxygen, wherein the second affinity to oxygen is higher than the first affinity to oxygen,
wherein the noble metal oxide layer (20) is arranged alongside to the sacrificial layer (22) and
wherein the fire resistant coating (2) is transformable from a first state to a second state upon exposure to fire and wherein the sheet resistance of the fire resistant coating (2) is smaller in the second state compared to the first state,
wherein the fire resistant coating (2) comprises at least one separator layer (23) arranged between the at least one noble metal oxide layer (20) and the at least one sacrificial layer (22) and wherein the separator layer (23) is designed to prevent reduction of the noble metal oxide of the noble metal oxide layer (20) at room temperature.

2. The fire resistant coating (2) according to claim 1, wherein the at least one noble metal oxide layer (20) comprises silver, copper, gold, platinum, palladium, iridium, and/or a mixture thereof and/or wherein the at least one noble metal oxide layer (20) has a thickness of 10 nm to 100 nm.

3. The fire resistant coating (2) according to any one of the previous claims, wherein the at least one sacrificial layer (22) comprises niobium, titanium, zirconium, hafnium, tantalum, vanadium, tungsten, molybdenum, nickel, chromium and/or a mixture thereof and/or an alloy thereof and/or wherein the at least one sacrificial layer (22) has a thickness of 0.5 nm to 10 nm.

4. The fire resistant coating (2) according to any one of the previous claims, wherein the sacrificial layer 22 comprises a lithophile element and the noble metal oxide layer 20 comprises a siderophil or chalcophil element according to Goldschmidt classification.

5. The fire resistant coating (2) according to any one of the previous claims, wherein the at least one separator layer (23) comprises zinc tin oxide and/or tin oxide, in particular indium tin oxide and/or wherein the separator layer (23) has a thickness of 0.5 nm to 50 nm.

6. The fire resistant coating (2) according to any one of the previous claims, wherein the fire resistant coating (2) comprises at least one barrier layer (24) arranged as outer most layer of the fire resistant coating (2) on the side facing either away from and/or towards a transparent panel element (1) and wherein the barrier layer (24) is designed to prevent a degrade/decomposition of the fire resistant coating (2).

7. The fire resistant coating (2) according to claim 6, wherein the at least one barrier layer (24) has a thickness of 5 nm to 50 nm and/or wherein the at least one barrier layer (24) comprises silicon oxide, silicon nitride, aluminium doted silicon oxide, aluminium doted silicon nitride, aluminium oxide, aluminium nitride, tin oxide, titanium oxide and/or a mixture therefore.

8. The fire resistant coating (2) according to any one of the previous claims, wherein the fire resistant coating (2) comprises at least one optical layer (21) arranged adjacent to the at least one sacrificial layer (22) facing away from the at least one noble metal oxide layer (20) and/or facing away form a transparent panel element (1) and wherein the optical layer (21) is designed to adjust the reflection optics of the fire resistant coating (2).

9. The fire resistant coating (2) according to claim 8, wherein the at least one optical layer (21) has a thickness of 5 nm to 100 nm and/or wherein the at least one optical layer (21) for adjusting the reflection optics of the fire resistant coating (2) comprises aluminium oxide, aluminium nitride, silicon oxide, silicon nitride, aluminium doted silicon oxide, aluminium doted silicon nitride, tin oxide titanium oxide, zirconium oxide, hafnium oxide, vanadium oxide, niobium oxide, tantalum oxide, chromium oxide, scandium oxide, yttrium oxide, aluminium doted zinc oxide (AZO), zinc tin oxide and/or indium tin oxide (ITO).

10. The fire resistant coating (2) according to any one of the previous claims, wherein the noble metal oxide layer (20) comprises at least two noble metal oxide sublayer (20) which are separated by at least one separator layer (23) designed to prevent reduction of the noble metal oxide of the noble metal oxide layer (20) at room temperature and/or by at least one sacrificial layer (22) designed for building a reducing surrounding for the at least one noble metal oxide layer (20).

11. The fire resistant coating (2) according to any one of the previous claims, wherein the fire resistant coating (2) comprises at least one seed layer (25) arranged adjacent to the at least on noble metal oxide layer (20) and wherein the seed layer (25) is designed to enhance the growth of a noble metal layer upon transformation of the noble metal oxide layer (20) into the second state.

12. A transparent fire resistant glazing product comprising a transparent panel element (1) and a fire transformable fire resistant coating (2) according to any one of claims 1 - 11, wherein the fire resistant coating (2) is arranged on a flat side of the transparent panel element (1).

13. The transparent fire resistant glazing product according to claim 12, wherein the at least one noble metal oxide layer (20) is arranged between the at least one sacrificial layer (22) and the transparent panel element (1).

14. The transparent fire resistant glazing product according to any one of the claims 12-13, wherein upon exposure to fire the fire transformable fire resistant coating (2) transforms at least partially to a metallic mirror which is capable of reflecting infrared radiation IR.

15. Use of a transparent fire resistant glazing product according to any one of claims 12-14 for manufacturing a building and/or vehicle.

## Patentansprüche

1. Durch einen Brand umwandelbare Brandschutzbeschichtung (2) zur Verwendung in einem durchsichtigen Brandschutzverglasungsprodukt, wobei die Brandschutzbeschichtung (2) auf einer flachen Seite eines durchsichtigen Plattenelements (1) angeordnet werden kann, wobei die durch einen Brand umwandelbare Brandschutzbeschichtung (2) Folgendes umfasst:
- mindestens eine Edelmetalloxidschicht (20) und
- mindestens eine Opferschicht (22),
wobei die mindestens eine Edelmetalloxidschicht (20) ein Edelmetalloxid mit einer ersten Sauerstoffaffinität umfasst und
wobei die mindestens eine Opferschicht (22) ein Übergangsmetall mit einer zweiten Sauerstoffaffinität umfasst, wobei die zweite Sauerstoffaffinität höher ist als die erste Sauerstoffaffinität,
wobei die Edelmetalloxidschicht (20) entlang der Opferschicht (22) angeordnet ist und
wobei die Brandschutzbeschichtung (2), wenn sie einem Brand ausgesetzt wird, von einem ersten Zustand in einen zweiten Zustand umwandelbar ist und wobei der Flächenwiderstand der Brandschutzbeschichtung (2) im zweiten Zustand kleiner ist als im ersten Zustand, wobei die Brandschutzbeschichtung (2) mindestens eine zwischen der mindestens einen Edelmetalloxidschicht (20) und der mindestens einen Opferschicht (22) angeordnete Separatorschicht (23) umfasst und wobei die Separatorschicht (23) zur Verhinderung der Reduktion des Edelmetalloxids der Edelmetalloxidschicht (20) bei Raumtemperatur ausgestaltet ist.

2. Brandschutzbeschichtung (2) nach Anspruch 1, wobei die mindestens eine Edelmetalloxidschicht (20) Silber, Kupfer, Gold, Platin, Palladium, Iridium und/oder eine Mischung davon umfasst und/oder wobei die mindestens eine Edelmetalloxidschicht (20) eine Dicke von 10 nm bis 100 nm aufweist.

3. Brandschutzbeschichtung (2) nach einem der vorhergehenden Ansprüche, wobei die mindestens eine Opferschicht (22) Niob, Titan, Zirconium, Hafnium, Tantal, Vanadium, Wolfram, Molybdän, Nickel, Chrom und/oder eine Mischung davon und/oder eine Legierung davon umfasst und/oder wobei die mindestens eine Opferschicht (22) eine Dicke von 0,5 nm bis 10 nm aufweist.

4. Brandschutzbeschichtung (2) nach einem der vorhergehenden Ansprüche, wobei die Opferschicht 22 ein lithophiles Element umfasst und die Edelmetalloxidschicht 20 ein siderophiles oder chalkophiles Element gemäß der Goldschmidt-Klassifikation umfasst.

5. Brandschutzbeschichtung (2) nach einem der vorhergehenden Ansprüche, wobei die mindestens eine Separatorschicht (23) Zinkzinnoxid und/oder Zinnoxid, insbesondere Indiumzinnoxid, umfasst und/oder wobei die Separatorschicht (23) eine Dicke von 0,5 nm bis 50 nm aufweist.

6. Brandschutzbeschichtung (2) nach einem der vorhergehenden Ansprüche, wobei die Brandschutzbeschichtung (2) mindestens eine Barriereschicht (24) umfasst, die als äußerste Schicht der Brandschutzbeschichtung (2) entweder auf der einem durchsichtigen Plattenelement (1) abgewandten oder zugewandten Seite angeordnet ist, und wobei die Barriereschicht (24) zur Verhinderung eines Abbaus bzw. eines Zerfalls der Brandschutzbeschichtung (2) ausgestaltet ist.

7. Brandschutzbeschichtung (2) nach Anspruch 6, wobei die mindestens eine Barriereschicht (24) eine Dicke von 5 nm bis 50 nm aufweist und/oder wobei die mindestens eine Barriereschicht (24) Siliciumoxid, Siliciumnitrid, aluminiumdotiertes Siliciumoxid, aluminiumdotiertes Siliciumnitrid, Aluminiumoxid, Aluminiumnitrid, Zinnoxid, Titanoxid und/oder eine Mischung davon umfasst.

8. Brandschutzbeschichtung (2) nach einem der vorhergehenden Ansprüche, wobei die Brandschutzbeschichtung (2) mindestens eine an die mindestens eine Opferschicht (22) angrenzend angeordnete optische Schicht (21) umfasst, die der mindestens einen Edelmetalloxidschicht (20) abgewandt ist und/oder einem durchsichtigen Plattenelement (1) abgewandt ist, und wobei die optische Schicht (21) zur Anpassung der Reflexionsoptik der Brandschutzbeschichtung (2) ausgestaltet ist.

9. Brandschutzbeschichtung (2) nach Anspruch 8, wobei die mindestens eine optische Schicht (21) eine Dicke von 5 nm bis 100 nm aufweist und/oder wobei die mindestens eine optische Schicht (21) zur Anpassung der Reflexionsoptik der Brandschutzbeschichtung (2) Aluminiumoxid, Aluminiumnitrid, Siliciumoxid, Siliciumnitrid, aluminiumdotiertes Siliciumoxid, aluminiumdotiertes Siliciumnitrid, Zinnoxid, Titanoxid, Zirconiumoxid, Hafniumoxid, Vanadiumoxid, Nioboxid, Tantaloxid, Chromoxid, Scandiumoxid, Yttriumoxid, aluminiumdotiertes Zinkoxid (AZO), Zinkzinnoxid und/oder Indiumzinnoxid (ITO) umfasst.

10. Brandschutzbeschichtung (2) nach einem der vorhergehenden Ansprüche, wobei die Edelmetalloxidschicht (20) mindestens zwei Edelmetalloxidteilschichten (20) umfasst, die durch mindestens eine zur Verhinderung der Reduktion des Edelmetalloxids der Edelmetalloxidschicht (20) bei Raumtemperatur ausgestaltete Separatorschicht (23) und/oder durch mindestens eine zum Aufbau einer reduzierenden Umgebung für die mindestens eine Edelmetalloxidschicht (20) ausgestaltete Opferschicht (22) getrennt sind.

11. Brandschutzbeschichtung (2) nach einem der vorhergehenden Ansprüche, wobei die Brandschutzbeschichtung (2) mindestens eine an die mindestens eine Edelmetalloxidschicht (20) angrenzend angeordnete Keimschicht (25) umfasst und wobei die Keimschicht (25) zur Förderung des Wachstums einer Edelmetallschicht bei der Umwandlung der Edelmetalloxidschicht (20) in den zweiten Zustand ausgestaltet ist.

12. Durchsichtiges Brandschutzverglasungsprodukt, umfassend ein durchsichtiges Plattenelement (1) und eine durch einen Brand umwandelbare Brandschutzbeschichtung (2) nach einem der Ansprüche 1-11, wobei die Brandschutzbeschichtung (2) auf einer flachen Seite des durchsichtigen Plattenelements (1) angeordnet ist.

13. Durchsichtiges Brandschutzverglasungsprodukt nach Anspruch 12, wobei die mindestens eine Edelmetalloxidschicht (20) zwischen der mindestens einen Opferschicht (22) und dem durchsichtigen Plattenelement (1) angeordnet ist.

14. Durchsichtiges Brandschutzverglasungsprodukt nach einem der Ansprüche 12-13, wobei die durch einen Brand umwandelbare Brandschutzbeschichtung (2), wenn sie einem Brand ausgesetzt wird, sich mindestens teilweise in einen metallischen Spiegel umwandelt, der zur Reflexion von Infrarotstrahlung IR in der Lage ist.

15. Verwendung eines durchsichtigen Brandschutzverglasungsprodukts nach einem der Ansprüche 12-14 beim Bau eines Gebäudes und/oder Fahrzeugs.

## Revendications

1. Revêtement (2) résistant au feu et transformable en cas de feu, à utiliser dans un produit de vitrage transparent résistant au feu, le revêtement (2) résistant au feu pouvant être agencé sur une face plane d'un élément (1) de panneau transparent, le revêtement (2) résistant au feu et transformable en cas de feu comprenant :
- une ou plusieurs couches (20) d'oxyde de métal précieux et
- une ou plusieurs couches sacrifiées (22),
la ou les couches (20) d'oxyde de métal précieux comprenant un oxyde de métal précieux présentant une première affinité vis-à-vis de l'oxygène,
la ou les couches sacrifiées (22) comprenant un métal de transition présentant une deuxième affinité vis-à-vis de l'oxygène, la deuxième affinité vis-à-vis de l'oxygène étant supérieure à la première affinité vis-à-vis de l'oxygène,
la couche (20) d'oxyde de métal précieux étant agencée sur la couche sacrifiée (22) et
le revêtement (2) résistant au feu pouvant passer d'un premier état à un deuxième état en cas d'exposition au feu, la résistance en couche mince du revêtement (2) résistant au feu étant plus petite dans le deuxième état que dans le premier état,
le revêtement (2) résistant au feu comprenant une ou plusieurs couches de séparation (23) disposées entre la ou les couches (20) d'oxyde de métal précieux, la ou les couches sacrifiées (22) et la couche de séparation (23) étant conçues pour empêcher à température ambiante la réduction de l'oxyde de métal précieux de la couche (20) d'oxyde de métal précieux.

2. Revêtement (2) résistant au feu selon la revendication 1, dans lequel la ou les couches (20) d'oxyde de métal précieux comprennent de l'argent, du cuivre, de l'or, du platine, du palladium, de l'iridium et/ou un mélange d'entre eux, et/ou dans lequel la ou les couches (20) d'oxyde de métal précieux ont une épaisseur de 10 nm à 100 nm.

3. Revêtement (2) résistant au feu selon l'une quelconque des revendications précédentes, dans lequel la ou les couches sacrifiées (22) comprennent du niobium, du titane, du zirconium, de l'hafnium, du tantale, du vanadium, du tungstène, du molybdène, du nickel, du chrome, un mélange d'entre eux et/ou un alliage d'entre eux et/ou dans lequel la ou les couches sacrifiées (22) ont une épaisseur de 0,5 nm à 10 nm.

4. Revêtement (2) résistant au feu selon l'une quelconque des revendications précédentes, dans lequel la couche sacrifiée (22) comprend un élément lithophile et la couche (20) d'oxyde de métal précieux comprend un élément sidérophile ou chalcophile au sens de la classification de Goldschmidt.

5. Revêtement (2) résistant au feu selon l'une quelconque des revendications précédentes, dans lequel la ou les couches de séparation (23) comprennent de l'oxyde de zinc et d'étain et/ou de l'oxyde d'étain, en particulier de l'oxyde d'indium et d'étain et/ou dans lequel la couche de séparation (23) a une épaisseur de 0,5 nm à 50 nm.

6. Revêtement (2) résistant au feu selon l'une quelconque des revendications précédentes, dans lequel le revêtement (2) résistant au feu comprend une ou plusieurs couches de barrière (24) agencées sur la face tournée ou la face non tournée vers un élément (1) de panneau transparent à titre de couches extérieures du revêtement (2) résistant au feu et dans lequel la couche de barrière (24) est conçue pour empêcher une dégradation ou une décomposition du revêtement (2) résistant au feu.

7. Revêtement (2) résistant au feu selon la revendication 6, dans lequel la ou les couches de barrière (24) ont une épaisseur de 5 nm à 50 nm et/ou dans lequel la ou les couches de barrière (24) comprennent de l'oxyde de silicium, du nitrure de silicium, de l'oxyde de silicium dopé à l'aluminium, du nitrure de silicium dopé à l'aluminium, de l'oxyde d'aluminium, du nitrure d'aluminium, de l'oxyde d'étain, de l'oxyde de titane et/ou un mélange d'entre eux.

8. Revêtement (2) résistant au feu selon l'une quelconque des revendications précédentes, dans lequel le revêtement (2) résistant au feu comprend une ou plusieurs couches optiques (21) agencées en position adjacente à la ou aux couches sacrifiées (22) non tournées vers la ou les couches (20) d'oxyde de métal précieux et/ou non tournées vers un élément (1) de panneau transparent et dans lequel la couche optique (21) est conçue pour ajuster l'optique de réflexion du revêtement (2) résistant au feu.

9. Revêtement (2) résistant au feu selon la revendication 8, dans lequel la ou les couches optiques (21) ont une épaisseur de 5 nm à 100 nm et/ou dans lequel la ou les couches optiques (21) servant à ajuster l'optique de réflexion du revêtement (2) résistant au feu comprennent de l'oxyde d'aluminium, du nitrure d'aluminium, de l'oxyde de silicium, du nitrure de silicium, de l'oxyde de silicium dopé à l'aluminium, du nitrure de silicium dopé à l'aluminium, de l'oxyde d'étain, de l'oxyde de titane, de l'oxyde de zirconium, de l'oxyde d'hafnium, de l'oxyde de vanadium, de l'oxyde de niobium, de l'oxyde de tantale, de l'oxyde de chrome, de l'oxyde de scandium, de l'oxyde d'yttrium, de l'oxyde de zinc dopé à l'aluminium, (AZO), de l'oxyde d'étain et de zinc et/ou de l'oxyde d'étain et d'indium (ITO).

10. Revêtement (2) résistant au feu selon l'une quelconque des revendications précédentes, dans lequel la couche (20) d'oxyde de métal précieux comprend deux ou plusieurs sous-couches (20) d'oxyde de métal précieux séparées par une ou plusieurs couches de séparation (23) conçues pour empêcher à température ambiante la réduction de l'oxyde de métal précieux de la couche (20) d'oxyde de métal précieux et/ou par une ou plusieurs couches sacrifiées (22) conçues pour établir une environnement réducteur pour la ou les couches (20) d'oxyde de métal précieux.

11. Revêtement (2) résistant au feu selon l'une quelconque des revendications précédentes, dans lequel le revêtement (2) résistant au feu comprend une ou plusieurs couches d'insémination (25) agencées en position adjacente à la ou aux couches (20) d'oxyde de métal précieux et dans lequel la couche d'insémination (25) est conçue pour renforcer la croissance d'une couche de métal précieux lors du passage de la couche (20) d'oxyde de métal précieux dans le deuxième état.

12. Produit de vitrage transparent résistant au feu comprenant un élément (1) de panneau transparent et un revêtement (2) résistant au feu et transformable en cas de feu selon l'une quelconque des revendications 1 à 11, dans lequel le revêtement (2) résistant au feu est agencé sur une face plane de l'élément (1) de panneau transparent.

13. Produit de vitrage transparent résistant au feu selon la revendication 12, dans lequel la ou les couches (20) d'oxyde de métal précieux sont agencées entre la ou les couches sacrifiées (22) et l'élément (1) de panneau transparent.

14. Produit de vitrage transparent résistant au feu selon l'une quelconque des revendications 12 et 13, dans lequel lorsqu'il est exposé au feu, le revêtement (2) résistant au feu et transformable en cas de feu se transforme au moins en partie en un miroir métallique capable de réfléchir le rayonnement infrarouge IR.

15. Utilisation d'un produit de vitrage transparent résistant au feu selon l'une quelconque des revendications 12 à 14 dans la construction d'un bâtiment et/ou la fabrication d'un véhicule.
